Europäisches Patentamt

European Patent Office

Office européen des brevets

(11) Publication number: **0 467 150 A1**

# EUROPEAN PATENT APPLICATION

(21) Application number: **91111025.2**

(22) Date of filing: **03.07.91**

(51) Int. Cl.5: **A23G 9/22, A23G 9/12**

(30) Priority: **19.07.90 IT 2097890**

(43) Date of publication of application:
**22.01.92 Bulletin 92/04**

(84) Designated Contracting States:
**AT BE CH DE DK ES FR GB GR IT LI LU NL SE**

(71) Applicant: FRIGOMAT S.r.l.
Via 1 Maggio
I-20070 Guardamiglio (Milan)(IT)

(72) Inventor: Cipelletti, Alberto
Via P.P. Polenghi, 7
San Fiorano (Milan)(IT)

(74) Representative: Marietti, Giuseppe
STUDIO ASSOCIATO MARIETTI & PIPPARELLI
Viale Caldara 38
I-20122 Milano(IT)

(54) Whipping device for the production of ice-cream and similar products.

(57) A whipping device for the production of ice-cream and similar products comprises a cooled cylinder (1) and a stirrer mounted on a motorized central shaft (2). The stirrer comprises a bracket (4) mounted at the top end of the central shaft (2) and carrying at its ends two side shafts (5, 6) parallel to the central shaft (2), one of said side shafts carring a scraping blade (7) rigidly fixed to the shaft, while the other side shaft (6) carries two superimposed blade rotors (8, 9) which are freely rotatable and act as planetary gears during the whipping device operation.

**Fig.1**

The present invention relates to a whipping device or mixing apparatus for the production of ice-cream or similar products.

More particularly the invention relates to a whipping device of the so-called "vertical" type.

The known whipping devices of this type are generally provided with a cylinder adapted to be cooled, inside which a stirrer is turnably provided consisting of a shaft with one or more blades or knives mounted thereon, which blades during rotation scrap the (cooled) wall of the cylinder and mix the ice-cream mixture previously introduced into the cylinder carrying it in succession in contact with said cooled walls until a coherent mass of ice-cream is formed.

Said whipping devices have the inconvenience of not allowing a perfectly uniform mixing of the mixture contained in the cylinder. In particular, in these whipping devices temperature differences of even 3-4 degrees C may occur between the central portion of the mass and that lying in the vicinity of the cooled cylindrical wall. Furthermore, the non optimal mixing may lead to the formation of clots when some ingredients (e.g. flavours) are introduced in the form of solids during production.

An object of the present invention is that of overcoming the aforementioned limitations of the known whipping devices, by obtaining a uniform mixing of the mixture to be whipped.

This object is achieved by means of the invention, which consists in a whipping device for the production of ice-cream and similar products, of the type provided with a cooled cylinder, inside which a stirrer is rotatably provided and equipped with at least a scraping blade acting on one or more walls of said cooling cylinder, characterised in that said stirrer further comprises at least a blade rotor freely mounted on said stirrer and movable therewith to simultaneously perform a movement of rotation and a movement of revolution.

Preferably, the stirrer comprises at least two rotors mounted in superimposed position, freely and independently rotatable about the same shaft of the stirrer.

Furthermore, the invention relates to a machine for the production of ice-cream or similar products, characterised in that it comprises at least a whipping device of the aforedescribed type.

The invention will be now further described with reference to a preferred but not limiting embodiment, illustrated in the accompanying drawings, wherein:

- Figure 1 is a front sectional view of a whipping device according to the invention; and
- Figure 2 is a view from the top of the whipping device of Figure 1.

With reference to said figures, the whipping device according to the invention comprises a cylinder 1 which is cooled by way of conventional type means housed therein and not illustrated, as not forming part of the invention. Inside the cylinder a central shaft 2 is mounted on bearings 3 and rotationally driven in a known way by an electric motor (not shown). At the free end of the shaft 2, a bracket 4 is mounted in a removable way, for example by means of a recess complementary to the shape of the top of the central shaft 2, or by means of other known means. At the bracket 4 ends, there are fastened, preferably in a removable way, at least one side shaft 5 and at least another side shaft 6, respectively, which result to be parallel to the central shaft.

The side shaft 5 bears a scraping blade or knife 7 of conventional type, the side surface 11 of which, slightly convex, engages the side wall of the cylinder 1, and extends downwards as far as the bottom 10 of the cylinder 1.

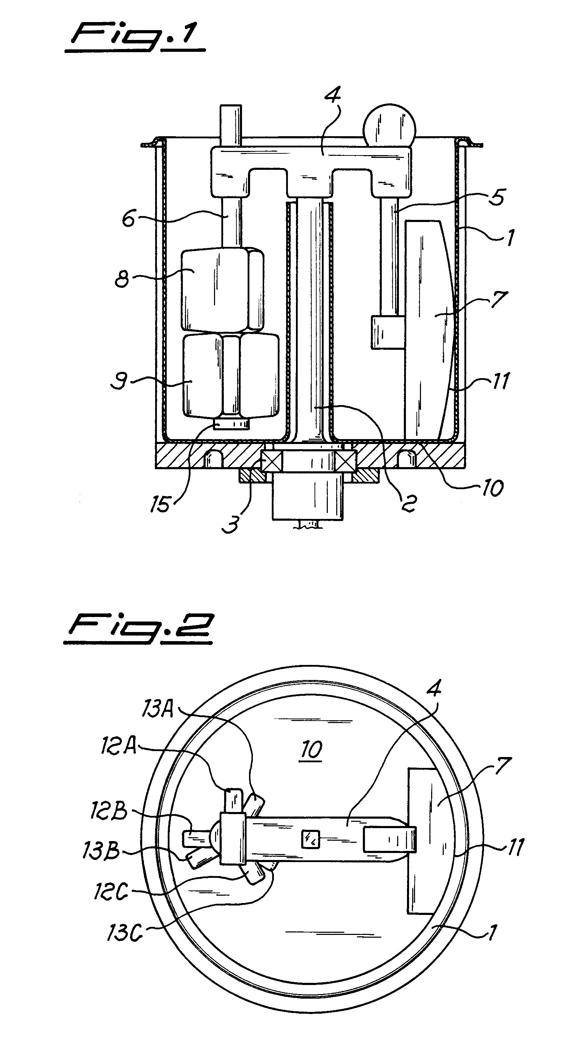

On the side shaft 6, at least a blade rotor is mounted in a freely rotatable manner; preferably, as shown in the embodiment of figure 1, the shaft (or shafts) 6 bears two superimposed blade rotors 8 and 9, freely and independently rotatable about the shaft 6. The blade rotor or rotors are therefore submitted to two simultaneous movements: the rotation of the central shaft 3 causes their revolution, together with the blade 7, about the central axis of the cylinder, whereas the viscosity of the mixture contained inside the whipping cylinder causes the rotation of the rotors about their own axis, namely about the axis of shaft 6 on which they are freely mounted. In other words, the rotors 8 and 9 behave as satellites and are simultaneously submitted to a movement of rotation and to a movement of revolution.

Each of the two rotors preferably comprises a sleeve or central body from which three angularly equidistant blades extend, 12A, 12B, 12C for rotor 8 and 13A, 13B, 13C for rotor 9 respectively. The number of the blades may also be different from three and the size of the blades is in any case such that they are preferably spaced from the inner wall of the cylinder 1.

In the preferred embodiment as shown, the two rotors 8, 9 are of the same configuration, so that they are interchangeable. The lower end of the shaft 6 extends as far as near the bottom 10 of the cylinder with a flange or enlargement 15 which prevents the rotors from sliding away from the shaft.

As described above, during the rotation of the central shaft 2, the two freely mounted rotors 8 and 9 perform a movement of rotation about their own shaft; the speed of their rotation may be different for each of them and depends on the local density of the product. With an identical configuration of the two rotors, their rotation speeds tend to become the same, as soon as the product tends to become homogeneous.

Of course more rotors or couples of rotors can be envisaged, for example the bracket 4 might have a star configuration, with three arms, and bear as many side shafts, one of which associated with a stiff scraping blade, while the others are provided with at least a free rotor of the type of rotors 8 and 9.

During operation of an ice-cream machine provided with a whipping device of the aforedescribed type, which machine represents a further object of the present invention, the mixture to be whipped is prepared separately or also directly in the device according to the invention, then cooling of the cylinder 1 is actuated and the rotation of the central shaft 3 takes place. The movement of the blade rotors 8 and 9 ensures a perfect mixing of the mixture both as far as its temperature is concerned, and as far as the incorporation therein of products added during the whipping stage is concerned.

**Claims**

1. A whipping device for the production of ice-cream and similar products, of the type comprising with a cooled cylinder (1) inside which a stirrer is rotatably mounted and carries at least a scraping blade (7) acting on one or more walls of said cooling cylinder, characterised in that said stirrer further comprises at least one blade rotor mounted thereon and movable therewith to simultaneously perform a movement of rotation and a movement of revolution.

2. A device according to claim 1, characterised in that said rotor or rotors are freely mounted on said stirrer.

3. A device according to claim 2, characterised in that said stirrer comprises at least one shaft bearing at least two superimposed blade rotors, freely and independently rotatable about said shaft.

4. A device according to one of the claims 1 to 3, characterised in that it comprises a central shaft on the free end of which a bracket (4) is mounted, to which bracket one or more shafts (5) bearing said scraping blade or blades and one or more shafts (6) bearing said blade rotor or rotors are fastened.

5. A device according to claim 4, characterised in that said bracket (4) is mounted in a removable way on the central shaft (2), and in that said shafts (5, 6) are removably mounted on said bracket (4).

6. A device according to one of the preceding claims, characterised in that said blade rotor or rotors comprise three blades angularly equidistant from each other.

7. A machine for the production of ice-cream or similar products, characterised in that it comprises at least a device according to one of claims 1 to 6.

8. A method for the production of ice-cream or similar products, characterised in that at least the whipping stage is performed by means of a device according to one of claims 1 to 6.

## _Fig.1_

## _Fig.2_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-980 511   (K. NAOUMOFF)<br>* Figures 1,2; page 1 *<br>— — — | 1,7,8 | A 23 G 9/22<br>A 23 G 9/12 |
| X | DE-A-848 202   (H. KUNZI)<br>* Figures 1,2; page 2, line 33 - page 3, line 15 *<br>— — — | 1,3,7,8 | |
| X | DE-A-915 343   (R. WAHL)<br>* The whole document *<br>— — — | 1,7,8 | |
| X | DE-A-2 535 820   (M. HARTMANN)<br>* Figure 1; claims 1-7 *<br>— — — | 1,7,8 | |
| A | US-A-1 704 590   (I. COHEN)<br>* Figure 3; page 1, line 45 - page 2, line 47 *<br>— — — | 1,2,7,8 | |
| X | US-A-1 956 613   (J.L. CORN et al.)<br>* Page 2, lines 117-134; figures 2,3,4,5 *<br>— — — | 1,2,4,5,7,8 | |
| X | US-A-2 243 317   (L.A. PHELAN)<br>* Page 3, column 2, lines 6-15; figures 11-13,5-8; claim 1 *<br>— — — | 1,2,4-7,8 | |
| A | DE-C-699 235   (M. HUFSCHMIDT)<br>— — — — — | | |

| | | |
|---|---|---|
| | | TECHNICAL FIELDS SEARCHED (Int. Cl.5) |
| | | A 23 G |

The present search report has been drawn up for all claims

| Place of search | Date of completion of search | Examiner |
|---|---|---|
| The Hague | 29 August 91 | GUYON R.H. |